# EUROPÄISCHE PATENTSCHRIFT

(11) **EP 2 337 644 B1**
(45) Veröffentlichungstag und Bekanntmachung des Hinweises auf die Patenterteilung: **16.09.2015**
(21) Anmeldenummer: 09737350.0
(22) Anmeldetag: 12.10.2009
(51) Int. Cl.: B21J 15/32, B23P 19/00, B23P 19/06

(54) **SETZGERÄT MIT EINEM MAGAZIN UND EINEM BEREITSTELLUNGSMODUL FÜR FÜGEELEMENTE**
PLACEMENT DEVICE HAVING A MAGAZINE AND A PROVISIONING MODULE FOR JOINING ELEMENTS
APPAREIL DE POSE COMPRENANT UN MAGASIN ET UN MODULE D'ALIMENTATION EN ÉLÉMENTS D'ASSEMBLAGE

(30) Priorität: 13.10.2008 DE 102008051489
(43) Veröffentlichungstag der Anmeldung: 29.06.2011
(73) Patentinhaber: Böllhoff Verbindungstechnik GmbH, 33649 Bielefeld (DE)
(72) Erfinder: WENZEL, Andreas, 45731 Waltrop (DE); KRAUSE, Mathias, 32139 Spenge (DE); HAESLER, Bernd, 33790 Halle/Westfahlen (DE); SPILLER-BOHNENKAMP, Iris, 33649 Bielefeld (DE); DRAHT, Torsten, 33758 Schloss Holte (DE)
(74) Vertreter: Heyer, Volker
(86) Internationale Anmeldenummer: PCT/EP2009/007324
(87) Internationale Veröffentlichungsnummer: WO 2010/043362

(56) Entgegenhaltungen:
- CH-A- 328 832
- DE-A1- 10 343 816
- DE-A1-102006 036 981
- DE-C- 344 559
- DE-C1- 3 713 524
- GB-A- 524 687
- GB-A- 2 224 997
- US-A- 1 125 411
- US-A- 2 186 841
- US-A- 2 909 302

## Beschreibung

### 1. Gebiet der Erfindung

Die vorliegende Erfindung betrifft ein Magazin eines Setzgeräts zum Speichern und Zuführen einer Mehrzahl von Fügeelementen, ein Bereitstellungsmodul, mit dem die Mehrzahl von Fügeelementen dem Magazin des Setzgeräts zuführbar ist, ein Setzgerät in Kombination mit diesem Magazin und diesem Bereitstellungsmodul sowie ein Zuführverfahren für Fügeelemente zum Setzgerät.

### 2. Hintergrund der Erfindung

Im Stand der Technik sind Setzgeräte für Fügeelemente, wie beispielsweise Stanznieten oder Setzbolzen, bekannt. Um ein Fügen von Fügeelementen in einer bestimmten Zeiteinheit zu gewährleisten, wird eine Mehrzahl von Fügeelementen in einem Magazin gespeichert. Dieses Magazin führt dann die Fügeelemente einzeln dem Setzgerät zu, so dass nicht für jedes neue Fügeelement ein aufwendiges Nachladen des Setzgeräts erfolgen muss.

In der WO 00/07751 werden Stanznieten in Röhren unterschiedlicher Querschnittsform vormagaziniert. Diese Röhren weisen beispielsweise einen T-förmigen Querschnitt auf. Des Weiteren sind mehrere Röhren miteinander verbunden, so dass beispielsweise in Form einer aufgewickelten Matte diese Röhren ein Vormagazin für Fügeelemente bilden. Des Weiteren erfolgt über Schläuche und Druckluft der Transport der Fügeelemente zum Setzgerät. Dort werden sie einem Magazin in Form eines weiteren Schlauchs aneinanderliegend zugeführt. Neben diesem Schlauch befindet sich ein weiterer Schlauch der ebenfalls als Magazin dient. Auf diese Weise werden Fügeelemente aus dem ersten Schlauch gefügt, während der zweite Schlauch zum Nachladen weiterer Fügeelemente genutzt wird.

US 1,767,926 beschreibt das Befestigen von Nägeln an einem Band, das innerhalb eines Trommelmagazins aufgewickelt ist. Während der Zufuhr der Nägel werden diese einzeln gegriffen und aus dem Band herausgelöst. Da diese Nägel alle über das Band miteinander verbunden sind, gewährleistet dieses Band den Vorschub aller im Trommelmagazin befindlichen Nägel.

WO 2007/031701 beschreibt ein durch Druckluft betriebenes Zufuhrsystem für Stanznieten eines Setzgeräts. Es besteht aus einer Ladestation, einem Zwischenmagazin und einem Zufuhrschlauch zum Setzgerät. Die Transportwege innerhalb dieses Systems weisen ein T-förmiges Profil auf, so dass sich der Nietkopf der Stanznieten auf den Schultern dieses Profils abstützt, um in dieser Lage bewegt zu werden. Die Stanznieten werden in eine Schiene mit T-förmigem Querschnitt eingeblasen, die ein Zwischenmagazin bildet. Aus diesem Zwischenmagazin werden dann die Stanznieten dem Setzgerät über einen Schlauch zugeführt.

DE 10 2008 018 428 beschreibt ein Streifenmagazin und ein revolverähnliches Rotationsmagazin. Beide Magazinarten werden schrittweise derart bewegt, dass sich nach einem Schritt jeweils ein neues Fügeelement unter dem Stempel des Setzgeräts befindet. Das Streifenmagazin umfasst einen starr ausgebildeten Streifen mit einer festen Anzahl an Haltepositionen für Fügeelemente. Das Rotationsmagazin umfasst eine feste Anzahl an Kammern, in denen jeweils ein Fügeelement angeordnet ist. Die einzelnen Haltepositionen bzw. Kammern werden in eine Zuführposition unterhalb des Stempels des Setzgeräts bewegt, so dass sich der Stempel beim Fügevorgang jeweils durch eine Halteposition hindurch bewegt.

GB 524,687 offenbart eine Nietpistole, die innerhalb eines Streifens gespeicherte Niete verarbeitet. Dieser Nietstreifen ist spiralförmig aufgewickelt und in einem entsprechenden Hohlraum als Magazin untergebracht. Innerhalb dieses Hohlraums befindet sich eine spiralförmige Nut, in die jeweils der Schaft der einzelnen Niete zur besseren Führung des Nietstreifens eingreift. Über den Nietstreifen werden die einzelnen Niete in die Setzpistole gezogen und dort verarbeitet.

Eine zur Magazinierung von länglichen Verbindungsgliedern, insbesondere von Schrauben, dienende Vorrichtung ist in GB 2,224,997 A beschrieben, auf der der Oberbegriff von Anspruch 1 basiert. Die Vorrichtung weist einen spiralförmig gewundenen Aufnahmekanal auf, in dem die Verbindungsglieder in identischer Lageorientierung angeordnet sind. Seitlich ist der Aufnahmekanal durch Kanalwände begrenzt, die von den Windungen einer Spiralfeder gebildet sind. Die quer zur Kanallängsrichtung gemessene Breite des Aufnahmekanals ist veränderbar.

Um im Vergleich zum Stand der Technik die Zufuhr von Fügeelementen zum Setzgerät zu verbessern, ist es die Aufgabe der vorliegenden Erfindung, ein leistungsfähiges Magazin für ein Setzgerät, ein Bereitstellungsmodul zum Befüllen des Magazins mit Fügeelementen sowie ein Zuführverfahren für Fügeelemente zum Magazin des Setzgeräts bereitzustellen.

### 3. Zusammenfassung der Erfindung

Die obige Aufgabe wird durch ein Magazin gemäß dem unabhängigen Patentanspruch 1, ein Setzgerät gemäß dem unabhängigen Patentanspruch 9 und durch ein Zuführverfahren gemäß dem unabhängigen Patentanspruch 11 gelöst. Weitere vorteilhafte Ausgestaltungen und Weiterentwicklungen vorliegender Erfindung gehen aus der folgenden Beschreibung, den Figuren und den anhängenden Ansprüchen hervor.

Das Magazin des Setzgeräts zum Speichern und Zuführen einer Mehrzahl von Fügeelementen, insbesondere Setzbolzen, ist in Anspruch 1 definiert und weist die folgenden Merkmale auf: ein Basiselement innerhalb des Setzgeräts mit einer Speichernut, in der die Fügeelemente ausgerichtet und gemeinsam bewegbar aufnehmbar sind und deren ein Ende in ein Kopfstück des Setzgeräts mündet, einen Vorschubmechanismus, mit dem die Fügeelemente innerhalb der Speichernut zum Kopfstück des Setzgeräts bewegbar sind, und einen Abgabemechanismus, mit dem die Fügeelemente einzeln aus der Speichernut dem Kopfstück des Setzgeräts zuführbar sind.

Mit Hilfe des oben beschriebenen Magazins wird eine Mehrzahl von Fügeelementen innerhalb des Setzgeräts gespeichert. Das Speichern der Mehrzahl von Fügeelementen innerhalb der Speichernut des Basiselements gewährleistet einen Betrieb des Setzgeräts in Normalposition wie auch in einer Über-Kopf-Position, ohne dass Fügeelemente herausfallen können. Des Weiteren wirken Vorschubmechanismus und Abgabemechanismus derart zusammen, dass die Mehrzahl an in der Speichernut gespeicherten Fügeelemente auf effektive Weise dem Fügekanal des Setzgeräts einzeln zuführbar sind. Nachdem die in der Speichernut gespeicherten Fügeelemente durch Fügen aufgebraucht sind, wird die Speichernut mit Hilfe des unten beschriebenen Bereitstellungsmoduls mit neuen Fügeelementen aufgefüllt.

Erfindungsgemäß ist die Speichernut des Basiselements spiralförmig ausgebildet und verläuft von einem äußeren Rand des Basiselements ins Zentrum des Basiselements. Zudem ist die Speichernut derart ausgebildet, dass die Fügeelemente über Formschluss darin gehalten werden.

Die spiralförmige Ausbildung der Speichernut innerhalb des Basiselements gewährleistet einerseits, dass eine Vielzahl von Fügeelementen innerhalb der Speichernut aufnehmbar ist. Diese Vielzahl an Fügeelementen verhindert ein permanentes Nachladen des Setzgeräts, so dass bestimmte Fügeaufgaben des Setzgeräts ohne Absetzen und Nachladen ausführbar sind. Des Weiteren gewährleistet die spiralförmige Gestalt der Speichernut, dass die Mehrzahl an Fügeelementen innerhalb der Speichernut einfach bewegbar sind. Die spiralförmige Gestalt weist nämlich weder Ecken noch Krümmungen mit geringem Krümmungsradius auf, durch die Fügeelemente nur mit einem gesteigerten Antriebsaufwand bzw. einer aufwendigen Antriebstechnik bewegbar wären. Des Weiteren ist der Reibungswiderstand beim Vorschub der Fügeelemente innerhalb der Spiralnut vernachlässigbar, so dass ein schneller Vorschub der Fügeelemente zum Fügekanal des Setzgeräts unterstützt wird.

Weiterhin erfindungsgemäß umfasst der Vorschubmechanismus des Magazins eine drehbare bürstenähnliche Anordnung, mit dem die Fügeelemente über Reibschluss innerhalb der Speichernut bewegbar sind. Gemäß einer nicht beanspruchten Ausführungsform umfasst der Vorschubmechanismus einen drehbar angeordneten Zeiger, der in die Speichernut eingreift und durch dessen Drehbewebung die Fügeelemente in Drehrichtung des Zeigers innerhalb der Speichernut verschiebbar sind.

Mit Hilfe der vorgeschlagenen Vorschubmechanismen wird eine Zufuhr der Fügeelemente zum Fügekanal mit geringem konstruktiven Aufwand gewährleistet. Bei der Verwendung der bürstenähnlichen Anordnung zum Vorschub der Fügeelemente mittels Reibschluss werden annähernd alle Fügeelemente innerhalb der Speichernut gleichzeitig in Richtung des Fügekanals des Setzgeräts bewegt. Gemäß der zweiten Alternative des Vorschubmechanismus mit Hilfe des drehbar angeordneten Zeigers greift dieser am letzten Fügeelement innerhalb der Speichernut an und schiebt die Mehrzahl an Fügeelementen in Richtung des Fügekanals des Setzgeräts. Gemäß einer bevorzugten Ausführungsform des Vorschubmechanismus werden mehrere Luftdüsen innerhalb der Speichernut angeordnet, so dass die Fügeelemente über ein Einblasen von Luft in die Speichernut bewegbar sind.

Der Abgabemechanismus des Magazins umfasst gemäß einer bevorzugten Ausführungsform einen Drehschieber, der die Fügeelemente einzeln aus der Speichernut in das Kopfstück des Setzgeräts bewegt. Gemäß einer weiteren Alternative werden am inneren Ende der spiralförmigen Speichernut zwei federvorgespannte Backen angeordnet. Diese Backen sind aufeinander zu federvorgespannt, so dass sie das Kopfstück und somit den Fügekanal des Setzgeräts bewegbar verschließen und bei Druck durch ein ankommendes Fügeelement selbständig freigeben. Gemäß einer Ausführungsform werden diese Backen allein in Kombination mit der Speichernut und dem Vorschubmechanismus eingesetzt.

Gemäß einer weiteren Alternative werden diese federvorgespannten Backen in Kombination mit dem oben genannten Drehschieber verwendet.

Zudem weist das Magazin bevorzugt ein Verbindungsmodul am äußeren Rand des Basiselements auf, an dem ein Vormagazin für Fügeelemente an dem Magazin befestigbar ist, so dass Fügeelemente aus dem Vormagazin in die Speichernut überführbar sind.

Offenbart wird auch ein nicht beanspruchtes Bereitstellungsmodul, mit dem eine Mehrzahl von Fügeelementen für ein Magazin eines Setzgeräts bereitstellbar und diesem zuführbar ist. Gemäß einer ersten Ausführungsform weist das Bereitstellungsmodul die folgenden Merkmale auf: eine Fördereinheit, mit der die Fügeelemente ausrichtbar und mindestens einem Vormagazin zuführbar sind, und eine Zufuhranordnung, mit der die Fördereinheit mit mindestens, vorzugsweise jeweils, einem Vormagazin über eine Transportbahn verbindbar ist, so dass die durch die Fördereinheit bereitgestellten Fügeelemente jedem Vormagazin mittels Schwerkraft gezielt zuführbar sind.

Offenbart wird des Weiteren ein nicht beanspruchtes Bereitstellungsmodul, mit dem eine Mehrzahl von Fügeelementen für ein Magazin eines Setzgeräts bereitstellbar und diesem zuführbar ist. Dieses bevorzugte Bereitstellungsmodul weist die folgenden Merkmale auf: eine Fördereinheit, mit der die Fügeelemente ausrichtbar und einer Mehrzahl von Vormagazinen, zuführbar sind, und eine um schaltbare Weichenanordnung, mit der die Fördereinheit mit mindestens, vorzugsweise jeweils, einem Vormagazin verbindbar ist, so dass die durch die Fördereinheit bereitgestellten Fügeelemente jedem Vormagazin mittels Schwerkraft gezielt zuführbar sind.

Die Bereitstellungsmodule gewährleisten, dass für ein Nachladen eines Magazins eines Setzgeräts nur ein begrenzter Zeitaufwand erforderlich ist, da die nachzuladenden Fügeelemente innerhalb des Bereitstellungsmoduls vormagaziniert werden. Auf diese Weise ist das Nachladen von einer Mehrzahl an Fügeelementen in Form eines Pakets möglich, so dass nicht für jedes Fügeelement einzeln ein Nachladevorgang gestartet werden muss. Daher werden innerhalb des

Bereitstellungsmoduls mit Hilfe der Fördereinheit jeweils eine Mehrzahl von Fügeelementen auf nur ein oder mehrere einzelne Vormagazine verteilt. Innerhalb der Vormagazine sind die Fügeelemente lagerichtig angeordnet, so dass eine nachfolgende Zufuhr zu einem Magazin des Setzgeräts keine Umorientierung der Fügeelemente erfordert. Bei der Zufuhr der Fügeelemente zum Vormagazin ist nur ein begrenzter konstruktiver Aufwand erforderlich, da die Fügeelemente mittels Schwerkraft in die Vormagazine bewegt werden. Dies vermeidet aufwendige Antriebssystemen, wie beispielsweise durch Druckluft oder auf mechanische Art. Wird die Mehrzahl an Fügeelementen nur einem Vormagazin zugeführt, ist die Fördereinheit vorzugsweise abschaltbar, während die Zufuhranordnung eine permanente und/oder unterbrechbare Verbindung zwischen Fördereinheit und Vormagazin herstellt.

Gemäß einer Ausführungsform umfasst die Fördereinheit des nicht beanspruchten Bereitstellungsmoduls einen Vibrationsförderer, mit dem Fügeelemente ausgerichtet aus einer ungeordneten Menge zur Weichenanordnung förderbar sind. Zudem ist bevorzugt die Weichenanordnung mit einem Bahnschieber mit mindestens einer Verbindungsbahn für Fügeelemente ausgestattet, während der Bahnschieber derart verschiebbar ist, dass die mindestens eine Verbindungsbahn eine Verbindung zwischen der Fördereinheit und dem mindestens einen Vormagazin herstellt. Durch das gezielte Anordnen der Verbindungsbahn mittels Bahnschieber entsteht eine ausgewählte Verbindung zwischen Vibrationsförderer und Vormagazin. Auf dieser Grundlage wird schnellstmöglich das erste verbundene Vormagazin mit Fügeelementen gerillt. Die Fügeelemente gleiten durch die Schwerkraft angetrieben in das Vormagazin, bis das Fassungsvermögen des Vormagazins an Fügeelementen erschöpft ist. Danach wird der Bahnschieber derart bewegt, dass mit Hilfe der Verbindungsbahn eine Verbindung zwischen Vibrationsförderer und einem weiteren Vormagazin hergestellt wird. Nun startet das Befüllen des weiteren Vormagazins aufs Neue. Es ist ebenfalls bevorzugt, den Bahnschieber als Abschalter der Zufuhr von Fügeelementen zum Vormagazin einzusetzen, indem die Verbindungsbahn zwischen Vibrationsförderer und Vormagazin durch Verschieben des Bahnschiebers unterbrochen wird, sobald ein Zufuhrstopp von Fügeelementen nötig ist bzw. angefordert wird. Es ist ebenfalls bevorzugt, den Bahnschieber mit mehr als einer Verbindungsbahn auszustatten, so dass gleichzeitig eine Verbindung zwischen Vibrationsförderer und mehreren Vormagazinen herstellbar ist.

Diese Vormagazine werden dann gleichzeitig befüllt, bis ihre Speicherkapazität an Fügeelementen erschöpft ist. Das Vorhandensein mehrerer Verbindungsbahnen im Bahnschieber stellt ebenfalls sicher, dass allein durch Verschieben des Bahnschiebers die Verbindung zwischen Vibrationsförderer und jedem einzelnen Vormagazin herstellbar ist.

Um den Transport von Fügeelementen innerhalb der Weichenanordnung zu unterstützen, ist die Weichenanordnung bevorzugt mit einem Vibrationselement verbunden.

Gemäß einer weiteren Ausführungsform des nicht beanspruchten Bereitstellungsmoduls umfasst das Vormagazin eine geneigt angeordnete Speicherschiene, in der die Fügeelemente ausgerichtet über Formschluss, bewegbar aufnehmbar und über die Neigung der Speicherschiene deren einem Ende selbständig, d. h. durch eine Eigenbewegung, zuführbar sind. In weiterer Ausgestaltung umfasst das Vormagazin an einem Ende der Speicherschiene eine bewegbare Stausperre zum Aufstauen der Fügeelemente und eine Kopplungseinheit, mit der das Vormagazin und das Magazin eines Setzgeräts verbindbar sind.

Gemäß einer weiteren Ausgestaltung des nicht beanspruchten Bereitstellungsmoduls ist das Vormagazin mit einer bewegbaren Schiebereinheit ausgestattet, die entlang der Speicherschiene bewegbar ist und in diese eingreift, so dass die Fügeelemente aus dem Vormagazin ausschiebbar sind. Vorzugweise umfasst zudem die Schiebereinheit einen ersten Sensor, mit dem eine Bewegung der Schiebereinheit entlang der Speicherschiene erfassbar ist, und/oder einen zweiten Sensor, mit dem ein Anliegen der Schiebereinheit an einer Mehrzahl aufgestauter Fügeelemente in der Speicherschiene erfassbar ist.

Sobald das Magazin eines Setzgeräts über die Kopplungseinheit des Vormagazins und das Verbindungsmodul des Magazins angeschlossen ist, werden die Fügeelemente aus dem Vormagazin nicht allein durch die Schwerkraft in das Magazin des Setzgeräts überführt. Hier unterstützt die Schiebereinheit, in dem die Mehrzahl an Fügeelementen aus dem Vormagazin direkt in die spiralförmige Speichernut des Magazins des Setzgeräts geschoben wird. Auf dieser Grundlage ist ein Nachladen des Setzgeräts mit geringem Zeitaufwand möglich.

Die vorliegende Erfindung umfasst des Weiteren ein Setzgerät zum Setzen von Fügeelementen mit dem oben beschriebenen Magazin und eventuell dem oben beschriebenen Bereitstellungsmodul.

Die vorliegende Erfindung offenbart zudem ein Zuführverfahren für Fügeelemente zu einem Magazin eines Setzgeräts gemäß Anspruch 11, das die folgenden Schritte aufweist: Befüllen eines Vormagazins eines Bereitstellungsmoduls mit einer Mehrzahl ausgerichtet angeordneter und bewegbarer Fügeelemente, Bewegen eines Setzgeräts mit Magazin zum Vormagazin und Ankoppeln des Magazins am Vormagazin und Ausschieben der Fügeelemente aus dem Vormagazin in das Magazin des Setzgeräts mit Hilfe einer Schiebeeinheit.

### 4. Detaillierte Beschreibung der Figuren

Bevorzugte Ausführungsformen vorliegender Erfindung werden unter Bezugnahme auf die begleitende Zeichnung näher erläutert. Es zeigen:
- Fig. 1: ein an einem Roboter befestigtes Setzgerät mit Magazin und einem zugeordneten Bereitstellungsmodul,

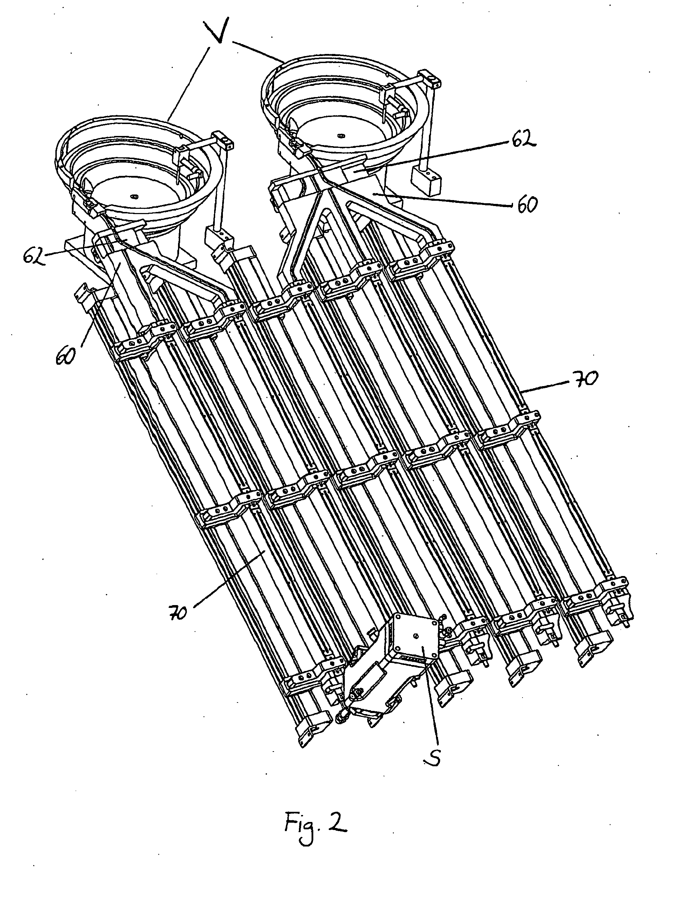

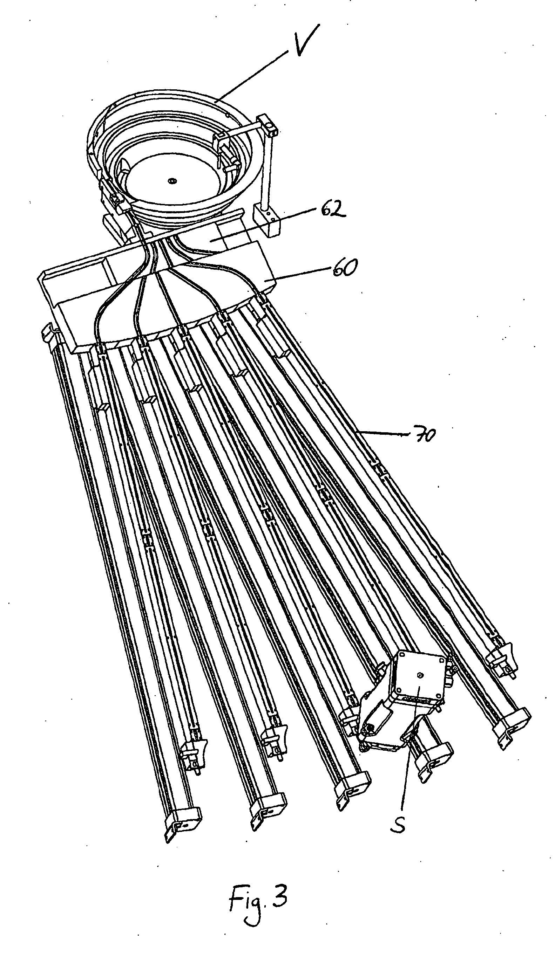

- Fig. 2 und 3: bevorzugte Ausführungsformen des Bereitstellungsmoduls,
- Fig. 4: eine vereinfachte Darstellung eines Setzgeräts,
- Fig. 5 und 6: verschiedene Ausführungsformen des Magazins des Setzgeräts,
- Fig. 7: eine Schnittdarstellung einer Ausführungsform des Magazins des Setzgeräts,

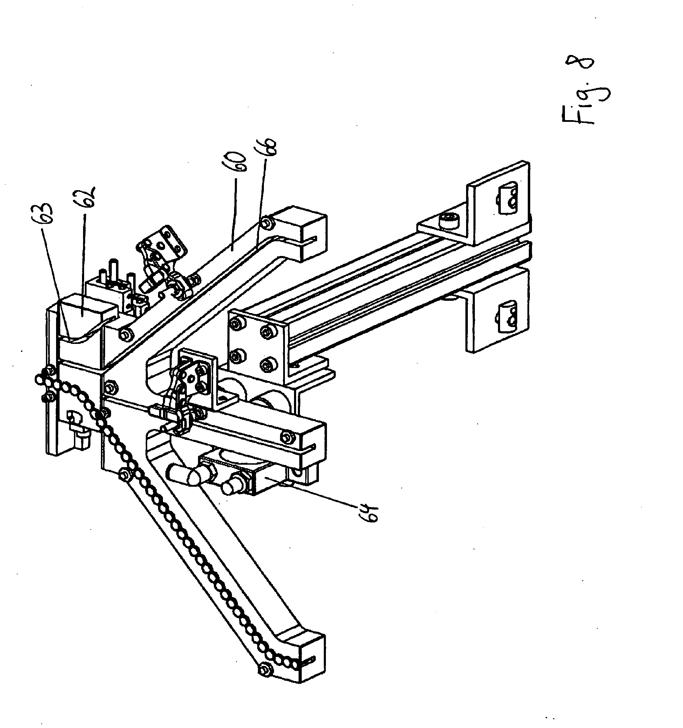

- Fig. 8: eine Ausführungsform der Weichenanordnung des Bereitstellungsmoduls,

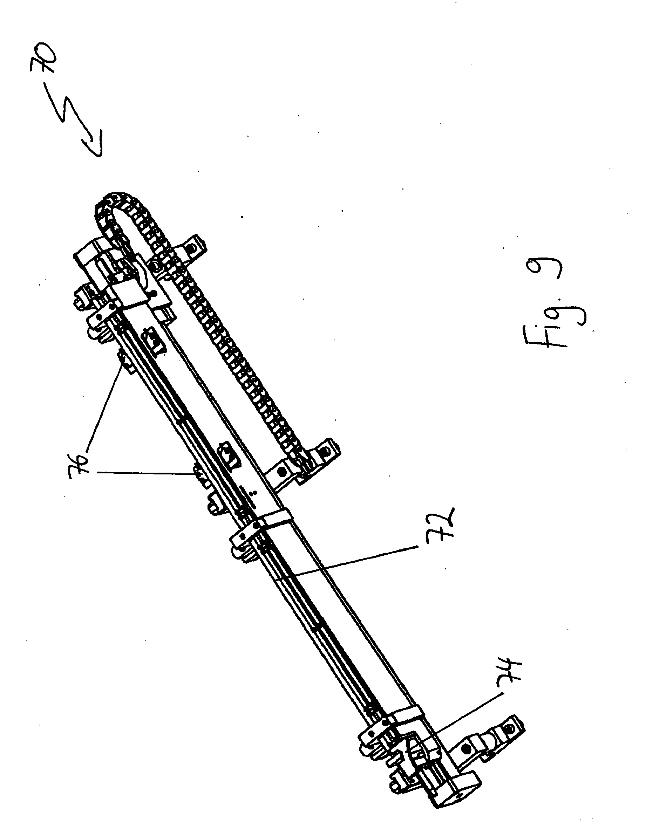

- Fig. 9: eine Ausführungsform des Vormagazins des Bereitstellungsmoduls,

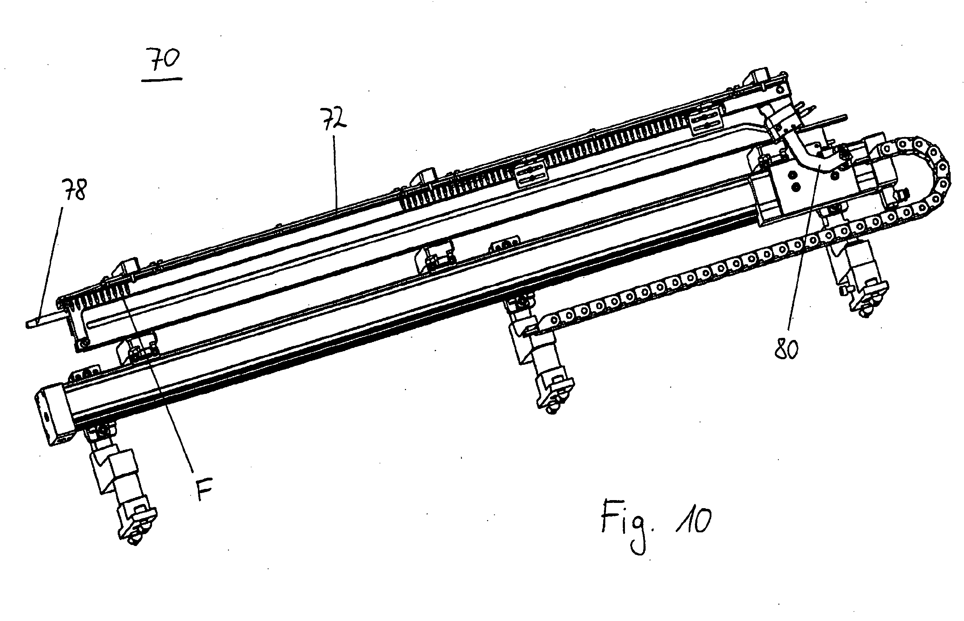

- Fig. 10: eine Seitenansicht des Vormagazins des Bereitstellungsmoduls mit Schiebereinheit,

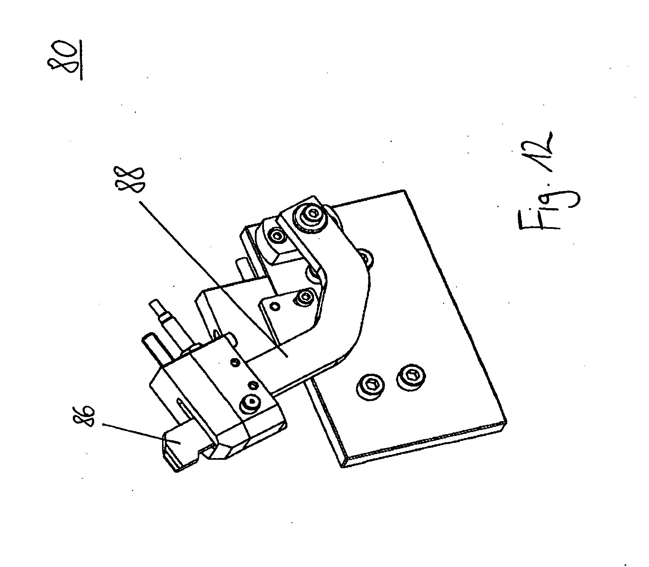

- Fig. 11 und 12: eine vergrößerte Darstellung der Schiebereinheit des Vonnagazins,
- Fig. 13: eine Kopplungseinheit des Vormagazins,

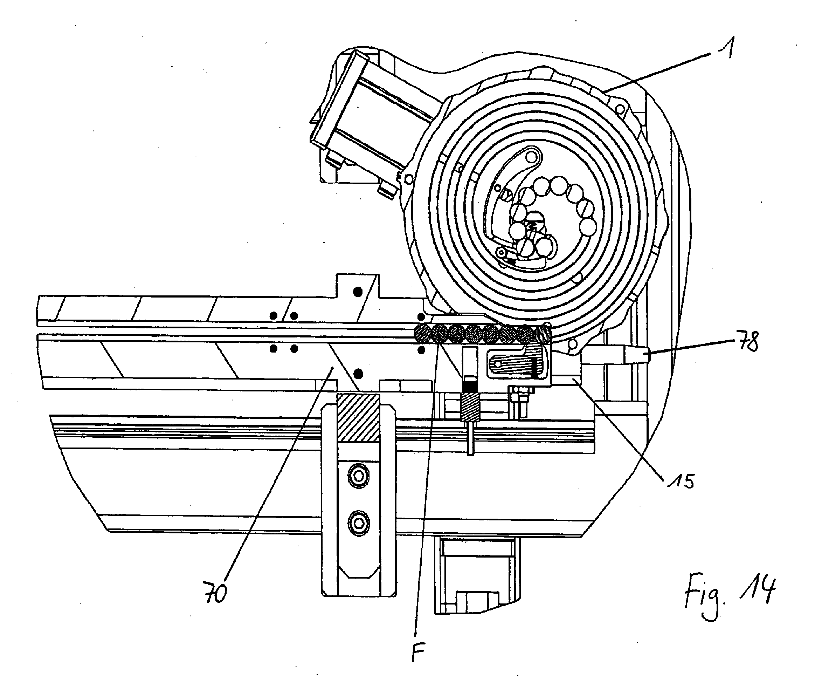

- Fig. 14: das Vormagazin in Verbindung mit dem Magazin des Setzgeräts in einer Schnittdarstellung und

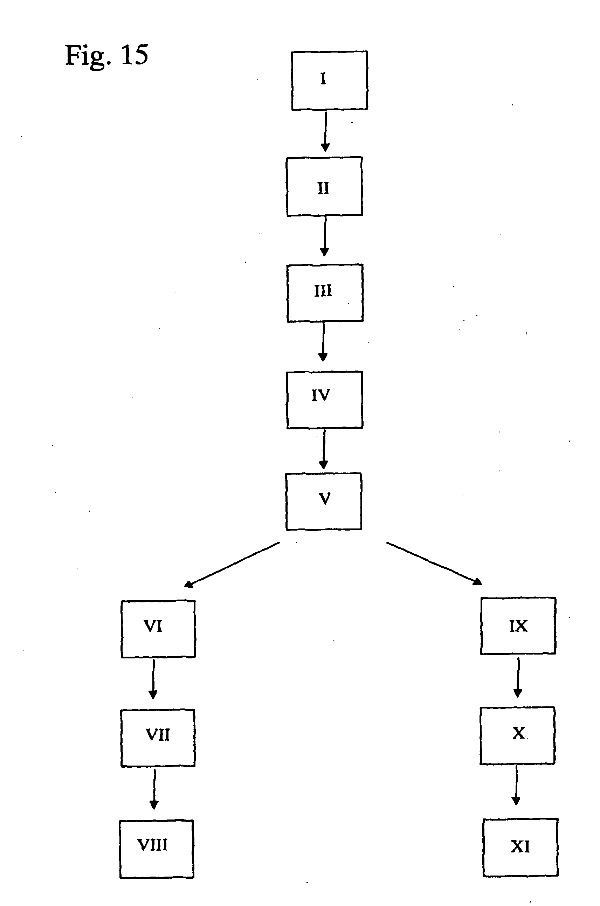

- Fig. 15: ein Flussdiagramm des Zuführverfahrens für Fügeelemente zu einem Magazin des Setzgeräts

### 5. Detaillierte Beschreibun bevorzugter Ausführungsformen

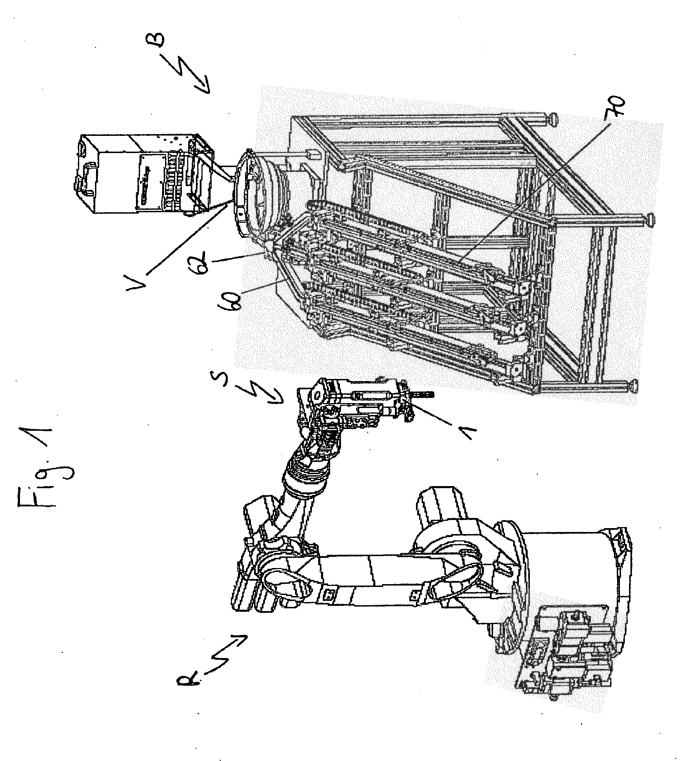

Vorliegende Erfindung betrifft ein Setzgerät S bekannter Art, das für Fügeelemente, wie beispielsweise Stanznieten und Setzbolzen, eingesetzt wird. Das Setzgerät S ist mit dem erfindungsgemäßen Magazin 1 ausgestattet, in dem eine Mehrzahl von Fügeelementen, insbesondere Setzbolzen, speicherbar ist. Um das Magazin 1 auf effiziente Weise mit Fügeelementen zu befüllen, ist es mit einem Bereitstellungsmodul B verbindbar (vgl. Fig. 1). Das Bereitstellungsmodul B stellt eine Mehrzahl ausgerichteter Fügeelemente aus einer ungeordneten Menge an Fügeelementen in einem Vormagazin 70 bereit. Das Vormagazin 70 ist zu einem gewünschten Zeitpunkt mit dem Magazin 1 des Setzgeräts S verbindbar, so dass Fügeelemente in das Magazin 1 nachfüllbar sind. Für dieses Nachfüllen von Fügeelementen bewegt ein Roboter R das Setzgerät S zum Bereitstellungsmodul B, so dass es dort zum Befüllen des Magazins 1 angekoppelt werden kann, und halt es in dieser Position fest, bis das Befüllen abgeschlossen ist. Wird gemäß einer bevorzugten Ausführungsform nur ein Vormagazin 70 verwendet, dient eine später beschriebene Weichenanordnung 60 als Zu- und Abschalter der Zufuhr von Fügeelementen zum Vormagazin 70. In dieser Ausführungsform ist es ebenfalls bevorzugt, an Stelle der Weichenanordnung 60 bzw. des Bahnschiebers eine optional unterbrechbare Verbindung zwischen einem bevorzugten Vibrationsförderer V (siehe unten) und Vormagazin 70 vorzusehen. Signalisiert beispielsweise ein Sensor am Vormagazin 70 (siehe unten), dass dieses mit Fügeelementen ausreichend gefüllt ist, unterbricht eine Sperre die Verbindungsbahn zwischen Vibrationsförderer V und Vormagazin 70. Es ist weiter bevorzugt, dass bei gleichem Signal des Sensors der Vibrationsförderer V die weitere Förderung von Fügeelementen unterbricht, bis das Vormagazin 70 wieder teilweise oder vollständig entladen ist.

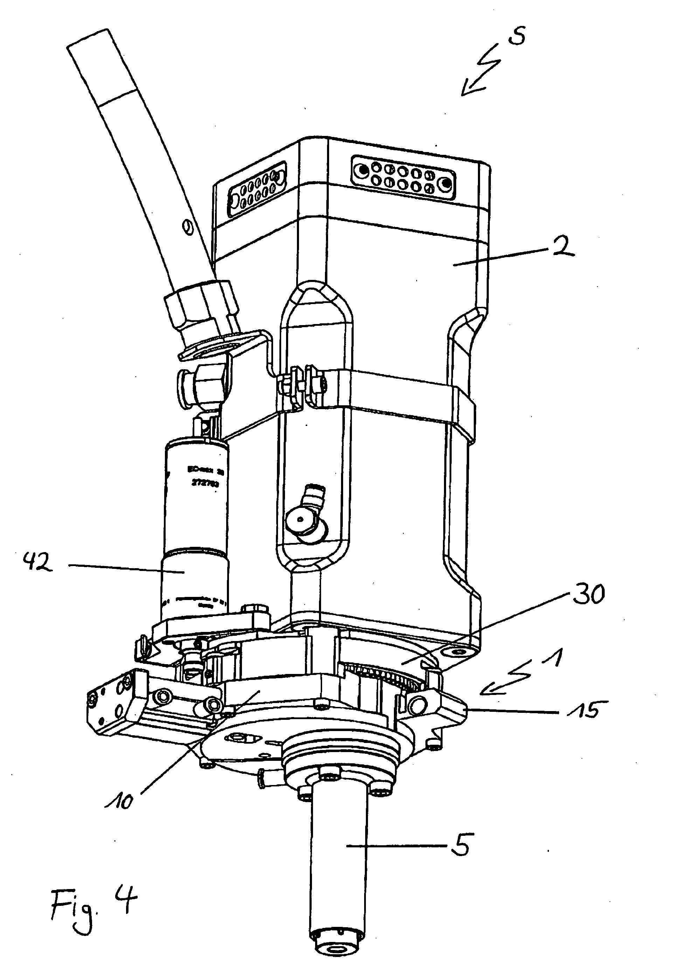

Das Setzgerät S ist beispielgebend in Fig. 4 dargestellt. Es umfasst einen Antrieb 2, das Magazin 1, ein Kopfstück 5 mit Fügekanal und einen Antrieb 42 für das Magazin 1. Zwischen Antrieb 2 und Kopfstück 5 des Setzgeräts S ist das Magazin 1 angeordnet, so dass Fügeelemente direkt aus dem Magazin 1 dem Kopfstück 5 zugeführt werden, um sie von dort mittels Stempel (nicht gezeigt) des Setzgeräts S zu fügen. Das Magazin 1 umfasst ein Basiselement 10 mit einer Abdeckung 30. Am Basiselement 10 ist ein Verbindungsmodul 15 vorgesehen, an dem das Bereitstellungsmodul B ankoppelbar ist. Das Magazin 1 ist in größerem Detail in den 5 und 6 dargestellt.

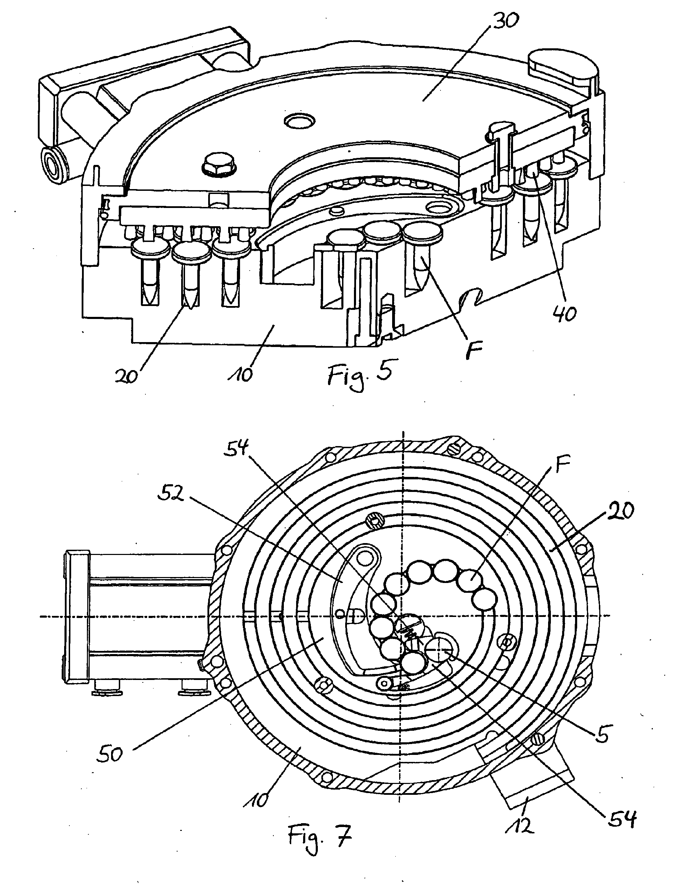

Fig. 5 zeigt eine perspektivische Schnittansicht einer ersten Ausführungsform des Magazins 1. Innerhalb des Basiselements 10 ist eine spiralförmige Speichernut 20 zur Aufnahme von Fügeelementen F angeordnet. Die spiralförmige Speichernut 20 verläuft vom umfänglichen äußeren Rand des Basiselements 10 nach innen zum Zentrum des Basiselements 10 und mündet dort in das Kopfstück 5 des Setzgeräts S. Der spiralförmige Verlauf der Speichernut 20 gewährleistet die Aufnahme einer Mehrzahl von Fügeelementen F, also eine hohe Speicherkapazität des Magazins 1 des Setzgeräts S. Des Weiteren stellt die spiralförmige Speichernut 20 sicher, dass eine annähernd widerstandsfreie Bewegung der Fügeelemente F in Richtung des Kopfstücks 5 innerhalb der spiralförmigen Speichernut erfolgen kann. Dies basiert darauf, dass die spiralförmige Speichernut 20 keine Ecken, Knicke oder Krümmungen mit kleinem Krümmungsradius aufweist, in denen Fügeelemente F bei ihrer Bewegung zum Kopfstück steckenbleiben oder stark abgebremst werden würden.

Beispielgebend sind in der Schnittdarstellung des Magazins 1 in 5 Setzbolzen als Fügeelement F dargestellt. Die Speichernut 20 ist in ihrer Größe derart ausgebildet, dass sich der Kopf eines Fügeelements F oberhalb der Speichernut 20 abstützt. Der Schaft des Fügeelements F wird durch die Speichernut 20 aufgenommen. Auf diese Weise werden die Fügeelemente F über einen Formschluss in der Speichernut 20 gehalten und geführt.

Angrenzend an die Speichernut 20 ist die Abdeckung 30 angeordnet, so dass die Fügeelemente F selbst bei einem Über-Kopf-Betrieb des Setzgeräts S nicht aus der Speichernut 20 fallen können. Die Abdeckung 30 umfasst einen Vorschubmechanismus, mit dem die Fügeelemente F innerhalb der Speichernut 20 zum Kopfstück 5 des Setzgeräts S bewegbar sind. Gemäß der Erfindung besteht der Vorschubmechanismus aus einer motorisch angetriebenen bürstenähnlichen Anordnung 40, beispielsweise einer Tellerbürste. Die bürstenähnliche Anordnung 40 ist flächig ausgebildet und stellt einen Reibschluss mit jeweils dem Kopf der Fügeelemente F in der Speichernut 20 her. Die bürstenähnliche Anordnung 40 ist zudem vorzugsweise in

Richtung der Fügeelemente F federvorgespannt, um den Reibschluss mit den Fügeelementen F zu gewährleisten und um einen Verschleiß der bürstenähnlichen Anordnung 40 zu minimieren.

Durch die Drehung der bürstenähnlichen Anordnung 40 mit Hilfe des Antriebs 42 werden die Fügeelemente F innerhalb der Speichernut 20 zum innenliegenden Ende der Speichernut 20 , also zum Kopfstück 5 , bewegt. Vorzugweise hat die bürstenähnliche Anordnung 40 eine Ringform, die einen nahe dem Kopfstück 5 befindlichen Bereich der Spiralnut 20 frei lässt. Durch die Drehung der bürstenähnlichen Anordnung 40 werden die Fügeelemente F zum Kopfstück 5 und damit zum Fügekanal des Setzgeräts S bewegt. Des Weiteren unterstützt optional die Drehung der bürstenähnlichen Anordnung 40 ein Befüllen des Magazins 1 mit neuen Fügeelementen F, wie es unten näher erläutert ist.

Der motorische Antrieb 42 des Vorschubmechanismus ist vorzugsweise an der Außenseite des Setzgeräts S angeordnet, wie es in Fig. 4 dargestellt ist. Es ist jedoch ebenfalls denkbar, den motorischen Antrieb 42 in das Magazin 1 des Setzgeräts zu integrieren.

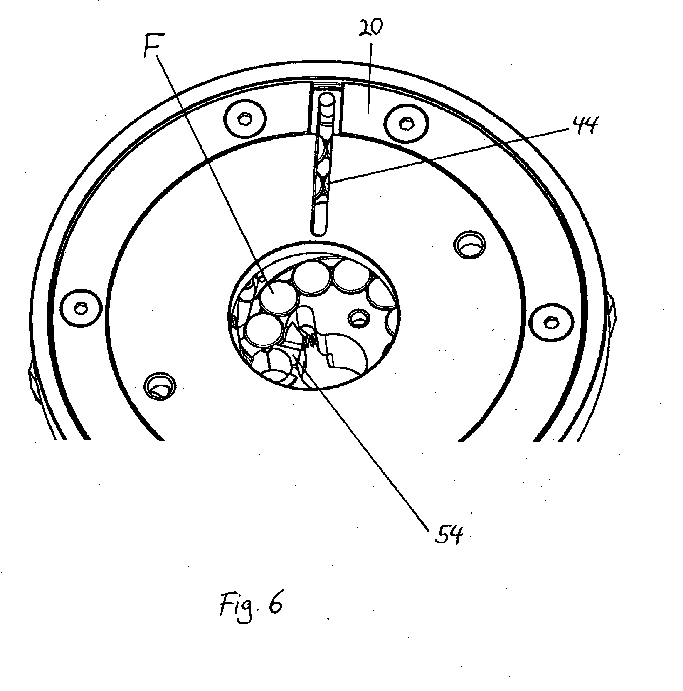

Gemäß einer nicht beanspruchten Alternative (vgl. Fig. 6) umfasst der Vorschubmechanismus einen motorisch angetriebenen und drehbar angeordneten Zeiger 44. Der Zeiger 44 greift in die Speichernut 20 ein und schiebt die Fügeelemente F in Richtung Kopfstück 5 des Setzgeräts S (vgl. Fig. 6). Auch bei dieser Alternative des Vorschubmechanismus verhindert die Abdeckung 30 ein Herausfallen der Fügeelemente F aus der Speichernut 20 bei einem Über-Kopf-Betrieb des Setzgeräts S.

Gemäß einer weiteren Ausführungsform des Vorschubmechanismus umfasst dieser eine Mehrzahl von Luftdüsen, die innerhalb der Speichernut 20 angeordnet sind. Über diese Luftdüsen ist Luft derart gerichtet in die Speichernut 20 einblasbar, dass die in der Speichernut 20 gespeicherten Fügeelemente F in Richtung des Kopfstücks 5 bewegbar sind. Auch bei dieser Anordnung sorgt die Abdeckung 30 wieder dafür, dass die in der Speichernut 20 gespeicherten Fügeelemente F bei einem Über-Kopf-Betrieb des Setzgeräts S nicht aus der Speichernut 20 fallen.

Angrenzend an das innere Ende der Speichernut 20 ist ein Abgabemechanismus 50 angeordnet. Zwei bevorzugte Ausführungsformen dieses Abgabemechanismus 50 sind in den 6 und 7 dargestellt. Gemäß der in Fig. 7 dargestellten Ausführungsform besteht der Abgabemechanismus 50 aus einem Drehschieber 52 und zwei federvorgespannten Backen 54. Der Drehschieber 52 ist vorzugsweise pneumatisch angetrieben, während auch andere Antriebsarten, beispielsweise elektrisch, anwendbar sind. Der Drehschieber 52 ist an seinem den Fügeelementen F abgewandten Ende drehbar befestigt und dreht sich bzw. verschwenkt um diese Befestigung, sobald er angetrieben wird. Diese Dreh- bzw. Schwenkbewegung bewegt das den Fügeelementen F zugewandte Ende des Drehschiebers 50 in Richtung des Kopfstücks 5, in dem der Fügekanal des Setzgeräts S verläuft.

Die beiden federvorgespannten Backen 54 versperren den Zugang zum Kopfstück 5 und im Speziellen zum Fügekanal bzw. Setzkanal des Kopfstücks. Wird der Drehschieber 52 angetrieben, drückt der Drehschieber 52 ein Fügeelement F gegen die Backen 54. Aufgrund dieses Drucks durch das Fügeelement F werden die Backen 54 gegen die Federvorspannung voneinander weg bewegt, so dass der Fügekanal freigegeben wird und sich das Fügeelement F in den Fügekanal des Setzkanals S bewegt. Sobald die Zufuhr abgeschlossen ist, d. h. das Fügeelement F den Fügekanal bzw. das Kopfstück 5 erreicht hat, bewegt sich der Drehschieber 52 zurück und die Backen 54 verschließen wieder den Zugang zum Kopfstück. Des Weiteren erfolgt eine Startauslösung und der Stempel des Setzgeräts S bewegt sich durch das Magazin 1 in den Fügekanal und fügt das Fügeelement F an der Fügestelle (nicht gezeigt).

Gemäß der in Fig. 6 gezeigten Ausführungsform des Abgabemechanismus 50 erfolgt die Zufuhr der Fügeelemente F ohne Drehschieber 52. Die in der Speichernut 20 befindlichen Fügeelemente F werden durch den Vorschubmechanismus in Richtung des Fügekanals bzw. des Kopfstücks 5 bewegt. Am inneren Ende der Speichernut 20 geben die federvorgespannten Backen 54 die ankommenden Fügeelemente F einzeln an den Fügekanal ab, da die Schubkraft des Abgabemechanismus 50 die Federvorspannung der Backe 54 überwindet. Nach Abgabe verschließen die Backen 54 und wieder den Fügekanal. Danach erfolgt das Setzen des Fügeelements F durch den Stempel, wie es bereits oben beschrieben worden ist.

Fig. 1 zeigt eine nicht beanspruchte Alternative des Bereitstellungsmoduls B in Kombination mit einem am Roboter R befestigten Setzgerät S. Das Bereitstellungsmodul B ist auf einem Gestell befestigt, um es beliebig, aber durch Roboter R und Setzgerät S erreichbar, positionieren zu können. Neben dieser Art der Anordnung sind noch andere Möglichkeiten denkbar, wie beispielsweise die feste Installation des Bereitstellungsmoduls B.

Das Bereitstellungsmodul B umfasst einen Vibrationsförderer V, der Fügeelemente F aus einer ungeordneten Menge lagerichtig bzw. ausgerichtet fördert und bereitstellt. Um den Nachschub an Fügeelemente F zu gewährleisten, wird der Vibrationsförderer V bevorzugt mit einem Bunker oder Speichermodul für Fügeelemente kombiniert.

Des Weiteren umfasst das Bereitstellungsmodul B eine Weichenanordnung 60, die einen bewegbaren Bahnschieber 62 umfasst. Die Weichenanordnung 60 stellt zwei, drei oder mehr Verbindungen zwischen dem Vibrationsförderer V und einer entsprechenden Anzahl an Vormagazinen 70 zur Verfügung. Dies ist beispielgebend in den 1 bis 3 dargestellt. Des Weiteren ist bevorzugt, die bereits oben beschriebene Konfiguration des Bereitstellungsmoduls B einzusetzen, in dem nur ein Vormagazin 70 mit dem Vibrationsförderer V verbunden ist (siehe oben). In dieser Ausführungsform umfasst der Bahnschieber 62 nur eine Verbindungsbahn zwischen dem einen Vormagazin 70 und dem Vibrationsförderer V. Zudem ist er anstelle als bewegbarer Schieber mit einer bewegbaren Sperre ausgestattet, die die Verbindungsbahn gezielt und gesteuert unterbrechen kann.

Gemäß 8 besteht der Grundkörper der Weichenanordnung 60 aus einer Gleitplatte mit einer Mehrzahl von Transportbahnen 66, in denen die Fügeelemente F transportiert werden. Das Gleiten der Fügeelemente F innerhalb der Weichenanordnung 60 resultiert aus der Wirkung der Schwerkraft, da die Weichenanordnung 60 als schiefe Ebene angeordnet ist. Zur weiteren Unterstützung des Gleitens der Fügeelemente F ist bevorzugt ein Vibrationselement 64 an der Weichenanordnung 60 befestigt. Gerade für den Fall, dass der Strom der Fügeelemente F angehalten bzw. unterbrochen worden ist, ermöglicht das Vibrationselement 64 ein erleichtertes Anlaufen der Fügeelemente innerhalb der Transportbahnen 66 der Weichenanordnung 60.

Die Weichenanordnung 60 umfasst zudem einen Bahnschieber 62, der mindestens eine Verbindungsbahn 63 aufweist. Der Bahnschieber 62 wird über einen pneumatischen Hubzylinder bewegt, während in diesem Zusammenhang auch andere Antriebsalternative anwendbar sind. Über das Verschieben oder Positionieren des Bahnschiebers 62 wird mittels der mindestens einen Verbindungsbahn 63 eine Verbindung zwischen den Vibrationsförderer V und mindestens einer Transportbahn 66 und damit einem Vormagazin 70 hergestellt. Der Bahnschieber 62 bestimmt somit, welchen Weg die Fügeelemente F nehmen. Es ist bevorzugt, den Bahnschieber 62 mit derart geformten Verbindungsbahnen 63 auszustatten, dass nur jeweils eine Verbindung zwischen dem Vibrationsförderer V und einem Vormagazin 70 herstellbar ist. In diesem Zusammenhang ist es jedoch ebenfalls denkbar, dass mehrere Verbindungsbahnen 63 bereitgestellt werden, so dass mehrere Vormagazine 70 gleichzeitig befüllt werden.

Nach dem Durchlaufen der Weichenanordnung 60 erreichen die Fügeelemente F das Vormagazin 70. Das Vormagazin 70 umfasst eine Speicherschiene 72 zum Aufnehmen und Speichern der Fügeelemente F. Die treibende Kraft zur Bewegung der Fügeelemente F ist auch in diesem Fall die Schwerkraft, weil die Speicherschiene 72 als geneigte Ebene angeordnet ist. Somit gleiten die Fügeelemente F selbständig zum der Weichenanordnung 60 abgewandten Ende der Speicherschiene 72, wo sie durch eine Sperre 74 aufgestaut werden. Die Querschnittsform der Speicherschiene 72 entspricht der der Speichernut 20, so dass die Fügeelemente F auf gleiche Weise darin gehalten werden.

Des Weiteren umfasst die Speicherschiene 72 bevorzugt Lichtsensoren oder Lichtschranken 76, die den Füllstand der Speicherschiene 72 mit Fügeelementen F erfassen. Ist eine bestimmte Füllstandsgrenze erreicht, wird dies durch die Lichtschranke 76 einer Steuereinheit signalisiert. Diese schaltet die weitere Zufuhr von Fügeelementen F durch den Vibrationsförderer V oder durch ein Verschieben des Bahnschiebers 62 ab. Wird der Bahnschieber 62 verschoben, kann beispielsweise dadurch die Verbindung zwischen Vibrationsförderer V und einem weiteren zu befüllenden Vormagazin 70 hergestellt werden.

Nachdem die Speicherschiene 72 ausreichend mit Fügeelementen F gefüllt worden ist, koppelt das Magazin 1 des Setzgeräts S an der Speicherschiene 72 an. Zu diesem Zweck umfasst die Speicherschiene 72 eine Kopplungseinheit 78 bestehend aus einem Stift und einem Sensor. Mit Hilfe des Stifts 78 erfolgt ein mechanisches Ankoppeln am Magazin 1 an dessen Verbindungsmodul 15, bei dem Speicherschiene 72 und Speichernut 20 derart zueinander ausgerichtet werden, dass die Fügelemente F widerstandslos in die Speichernut 20 bewegt werden können. Das Verbindungsmodul 15 weist zu diesem Zweck eine passende Öffnung für den Stift der Kopplungseinheit 78 auf. Sobald das Magazin 1 an der Speicherschiene 72 angekoppelt ist, erfolgt kein Verriegeln sondern ein Festhalten des Magazins 1 mit Hilfe des Roboters R in dieser Position. Zudem erfasst der Sensor der Kopplungseinheit 78, dass die Verbindung zwischen Magazin 1 und Speicherschiene 72 hergestellt ist. Basierend auf dieser Information des Sensors startet die Steuereinheit das Überführen der Fügeelemente F aus der Speicherschiene 72 in die Speichernut 20 des Magazins 1.

Zum Überführen der Fügeelemente F aus dem Vormagazin 70 bzw. der Speicherschiene 72 in das Magazin 1 des Setzgeräts S umfasst das Vormagazin 70 eine Schiebereinheit 80, die entlang der Speicherschiene 72 bewegbar ist. Zu diesem Zweck ist die Schiebereinheit 80 ähnlich einem Schlitten auf einer Schiene 82 motorisch angetrieben geführt. Die Schiebeeinheit 80 umfasst einen Schwenkarm 88, der in einer Kurvenbahn 84 an der Speicherschiene 72 geführt ist. Des Weiteren ist an diesem Schwenkarm 88 ein federnder Anschlag 86 vorgesehen, der bei entsprechender Positionierung an den in der Speicherschiene 72 gespeicherten Fügeelementen angreift und diese aus der Speicherschiene 72 in das Magazin 1 schiebt.

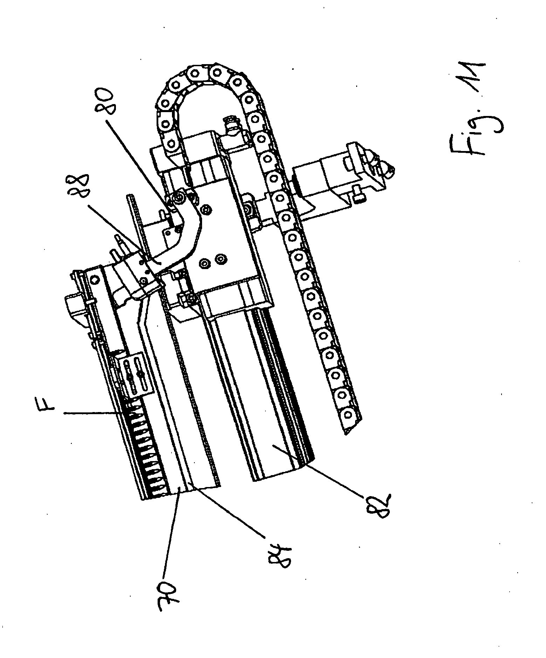

Verfährt die Schiebereinheit 80 entlang der Schiene 82 zum Ausschieben der Fügeelemente F aus der Speicherschiene 72 - in Fig. 11 ist dies eine Bewegung der Schiebereinheit 80 nach links -, wird der Anschlag 86 in Richtung der Fügeelemente F bewegt, weil der Schwenkarm 88 in der Kurvenbahn 84 geführt ist. Diese Führung wird beispielsweise durch eine Rolle realisiert, die an dem Schwenkarm 88 befestigt ist und in die Kurvenbahn 84 eingreift. Bewegt sich die Schiebeeinheit 80 entlang der Schiene 82 von der Weichenanordnung 60 weg, wird der federnde Anschlag 86 derart bewegt, dass er von unten in die Speicherschiene 72 eingreift und mit dem Schaft des dort zuletzt gespeicherten Fügeeleements F in Anlage kommt. Durch ein weiteres Verfahren der Schiebereinheit 80 entlang der Schiene 82 werden die Fügeelemente F aus der Speicherschiene 72 in das Magazin 1 geschoben, weil die Sperre 74 am unteren Ende der Speicherschiene 72 den Weg für die Fügeelemente F freigibt, da die federnde Sperrkraft der Sperre 74 geringer ist als die Vorschubkraft der Schiebereinheit 80.

Die Schiebereinheit 80 schiebt die Fügeelemente F solange vor sich her, bis das Magazin 1 des Setzgeräts S vollständig gefüllt ist. Der Zustand des vollständig gefüllten Magazins 1 wird durch ein Messsystem der Schiebereinheit 80 erkannt. Zu diesem Zweck umfasst die Schiebereinheit 80 einen ersten Sensor, mit dem die Bewegung der Schiebereinheit 80 entlang der Speicherschiene 72 erfassbar ist. Erfasst dieser erste Sensor, dass sich die Schiebereinheit 80 nicht mehr entlang der Speicherschiene 72 bewegt, ist dies ein erster Hinweis darauf, dass das Magazin 1 vollständig gefüllt sein könnte. Ein derartiger Sensor arbeitet beispielsweise als Lichtsensor, der über eine regelmäßige Unterbrechung des von ihm erfassten Lichtsignals feststellt, dass sich die Schiebereinheit 80 bewegt. Bleibt diese regelmäßige Unterbrechung des Lichtssignals aus, bewegt sich die Schiebereinheit 80 nicht mehr entlang der Speicherschiene 72.

Zudem umfasst die Schiebereinheit 80 einen zweiten Sensor, mit dem das Anliegen der Schiebeeinheit 80 an einer Mehrzahl aufgestauter Fügeelemente F in der Speicherschiene 72 erfassbar ist. Dies wird über den federnden Anschlag 86 realisiert, der bei einem Stau von Fügeelementen F in der Speicherschiene 72 während des Befüllens des Magazins 1 entgegen der ausschiebenden Verfahrbewegung der Schiebereinheit 80 innerhalb eines Langlochs ausgelenkt wird. Diese Auslenkbewegung des federnden Anschlags 86 ist über einen Sensor erfassbar. Erhält somit die Steuereinheit vom ersten Sensor die Information, dass sich die Schiebereinheit 80 nicht mehr entlang der Speicherschiene 72 bewegt, und vom Sensor am federnden Anschlag 88, dass die Schiebereinheit 80 auf eine aufgestaute Menge an Fügeelementen F aufgefahren ist, steuert die Steuereinheit ein Zurückfahren der Schiebereinheit 80 in ihre Ausgangsposition an. Diese Ausgangsposition ist nahe der Weichenanordnung 60, in der aufgrund der Kurvenbahn 84 der federnde Anschlag 86 und der Schwenkhebel 88 wieder entfernt von den Fügeelementen F innerhalb der Speichernut 72 angeordnet ist. Aufgrund dieser Ausgangsposition der Schiebereinheit 80 gibt der federnde Anschlag 86 die Speicherschiene 72 frei, so dass neue Fügeelemente F in die Speicherschiene 72 einlaufen können.

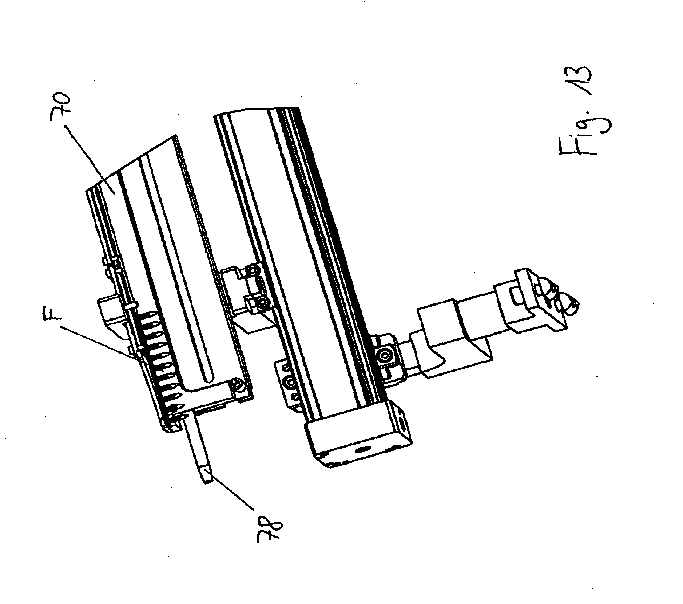

Basierend auf den obigen Beschreibungen werden die Schritte des Zuführverfahrens für Fügeelemente F zum Magazin 1 des Setzgeräts S im Folgenden zusammengefasst. Zur weiteren Erläuterung sind diese Schritte in einem Flussdiagramm in Fig. 13 dargestellt.

Zunächst erfolgt im Schritt I ein Füllen des Vibrationsförderers V mit Fügeelementen F. Gemäß Schritt II werden die Fügeelemente F aus dem Vibrationsförderer V gefördert und ausgerichtet. Um das Füllen des Magazins 1 des Setzgeräts S vorzubereiten, wird zunächst mindestens ein Vormagazin 70, vorzugsweise eine Mehrzahl von Vormagazinen 70, innerhalb des Bereitstellungsmoduls B bereitgestellt. Dieser Vorgang erfolgt im Schritt III. Diese Vormagazine 70 sind über die Weichenanordnung 60 mit dem Vibrationsförderer V verbunden, wie es oben beschrieben worden ist. Im Schritt IV wird das erste Vormagazin 70 mit Fügeelementen F gefüllt. Dazu werden die von dem Vibrationsförderer V bereitgestellten Fügeelemente F über die Weichenanordnung 60 dem ersten Vormagazin 70 zugeführt. Im Schritt V signalisiert der mindestens eine Sensor 76 am Vormagazin 70, dass ein bestimmter Füllstand an Fügeelementen F im Vormagazin 70 erreicht ist. Basierend auf dieser Information unterbricht eine Steuereinheit des Bereitstellungsmoduls B die weitere Zufuhr von Fügeelementen F. Das Unterbrechen der Zufuhr weiterer Fügeelemente F zum Vormagazin 70 erfolgt gemäß zwei unterschiedlicher Alternativen. Im Schritt VI wird die Zufuhr von Fügeelementen F zum ersten Vormagazin 70 durch Abschalten des Vibrationsförderers V realisiert. Alternativ dazu wird im Schritt IX das Unterbrechen der weiteren Zufuhr von Fügeelementen zum ersten Vormagazin 70 durch Umschalten der Weichenanordnung 60 zur Übertragung der Fügeelemente F auf ein weiteres Vormagazin 70 umgesetzt. Nachfolgend findet in den Schritten VIII und X ein Ankoppeln des Magazins 1 an dem ersten Vormagazin 70 oder an einem weiteren bereits gefüllten Vormagazin 70 statt. Sobald dieses Ankoppeln abgeschlossen und durch einen entsprechenden Sensor der Steuereinheit signalisiert worden ist, weist die Steuereinheit ein Übertragen der Fügeelemente F aus dem Vormagazin 70 in das Magazin 1 mit Hilfe der Schiebereinheit 80 an. Dieses Übertragen findet in den Schritten VIII und XI statt. Abschließend kehrt die Schiebereinheit 80 wieder in ihre Ausgangsposition nahe der Weichenanordnung 60 zurück und gibt dadurch das Vormagazin 70 für ein erneutes Füllen mit Fügeelementen F frei.

## Patentansprüche

1. Magazin (1), mit dem ein Setzgerät (S) zum Speichern und Zuführen einer Mehrzahl von Fügeelementen (F), insbesondere Setzbolzen, austattbar ist, das die folgenden Merkmale aufweist:
a) ein Basiselement (10), mit dem das Setzgerät (S) innerhalb ausstattbar ist, mit einer spiralförmigen Speichernut (20), die von einem umfänglichen Rand des Basiselements (10) zu dessen Zentrum verläuft und in der die Fügeelemente (F) ausgerichtet und gemeinsam bewegbar an einem radial äußeren Ende aufnehmbar sind, wobei ein radial inneres Ende der Speichernut (20) ausgebildet ist, um in ein Kopfstück (5) des Setzgeräts zu münden, **dadurch gekennzeichnet, dass** das Magazin (1) weiterhin aufweist:
b) einen Vorschubmechanismus mit einer flächig ausgebildeten drehbaren bürstenähnlichen Anordnung (40), mit dem die Fügeelemente (F) über Reibschluss innerhalb der Speichernut (20) zu dem Kopfstück (5) des Setzgeräts (S) bewegbar sind, und
c) einen Abgabemechanismus (50), mit dem die Fügeelemente (F) innerhalb der Speichernut (20) zu dem Kopfstück (5) des Setzgeräts (S) zuführbar sind.

2. Magazin (1) gemäß Anspruch 1, dessen Speichernut (20) derart ausgebildet ist, dass die Fügeelemente (F) über Formschluss darin gehalten werden.

3. Magazin (1) gemäß Anspruch 1, dessen bürstenähnliche Anordnung (40) an einer Seite des Basiselements (10) abgewandt von einem Setzkanal angeordnet ist.

4. Magazin (1) gemäß Anspruch 1, dessen Vorschubmechanismus eine Mehrzahl von Luftdüsen aufweist, die innerhalb der Speichernut (20) angeordnet sind, so dass die Fügeelemente über (F) ein Einblasen von Luft in die Speichernut (20) bewegbar sind.

5. Magazin (1) gemäß Anspruch 1, dessen Abgabemechanismus (50) einen Drehschieber (52) umfasst, der die Fügeelemente (F) einzeln aus der Speichernut (20) in das Kopfstück (5) des Setzgeräts (S) bewegt.

6. Magazin (1) gemäß Anspruch 1 oder 5, dessen Abgabemechanismus (50) zwei federvorgespannte Backen (54) aufweist, die das Kopfstück (5) des Setzgeräts (S), insbesondere den Setzkanal des Kopfstücks (5), bewegbar verschließen und bei Druck durch ein Fügeelement (F) selbständig den Setzkanal freigeben.

7. Magazin (1) gemäß Anspruch 1, das weiterhin ein Verbindungsmodul (15) am äußeren Rand des Basiselements (10) aufweist, an dem ein Vormagazin (70) für Fügeelemente (F) an dem Magazin (1) befestigbar ist, so dass Fügeelemente (F) aus dem Vormagazin (70) in die Speichernut (20) überführbar sind.

8. Magazin (1) gemäß Anspruch 1, das weiterhin einen Sensor angrenzend an die Speichernut (20) aufweist, mit dem ein Unterschreiten einer Mindestanzahl von Fügeelementen (F) innerhalb der Speichernut (20) erfassbar ist.

9. Setzgerät (S) zum Setzen von Fügeelementen (F), das ein Magazin (1) gemäß einem der Ansprilche 1 bis 8 aufweist.

10. Setzgerät (S) gemäß Anspruch 9, das an einem Roboter (R) befestigt ist, so dass das Setzgerät (S) zu einem Bereitstellungsmodul (B) bewegbar ist.

11. Zuführverfahren für Fügeelemente (F) zu einem Magazin (1) gemäß einem der Ansprüche 1 bis 8 eines Setzgeräts (S), **gekennzeichnet durch** die folgenden Schritte:
a) Befüllen (IV) eines Vormagazins (70) eines Bereitstellungsmoduls (B) mit einer Mehrzahl ausgerichtet angeordneter und bewegbarer Fügeelemente (F),
b) Bewegen eines Setzgeräts (S) mit dem Magazin (1) zum Vormagazin (70) und Ankoppeln (VIII, X) des Magazins (1) am Vormagazin (70), und
c) Ausschieben (VIII, XI) der Fügeelemente aus dem Vormagazin (70) in das Magazin (1) des Setzgeräts (S) mit Hilfe einer Schiebeeinheit (80).

## Claims

1. Magazine (1) by means of which a setting device (S) is equipable for storing and feeding a plurality of joining elements (F), particularly setting bolts, that has the following features:
a) a base element (10) by means of which the setting device (S) is equipable in the interior and having a spiral storage groove (20) extending from a circumferential edge of the base element (10) to its center and in which the joining elements (F) can be received at a radial outer edge aligned and jointly movable, and wherein a radial inner end of the storage groove (20) is formed to open into a head piece (5) of the setting device (S), **characterized in that** the magazine (1) further comprises:
b) an advancing mechanism having an areal designed rotatable brush-like arrangement (40) by means of which the joining elements (F) can be moved within the storage groove (20) toward the head piece (5) of the setting device (S) by means of friction connection, and
c) a dispensing mechanism (50) by means of which the joining elements (F) within the storage groove (20) can be fed into the head piece (5) of the setting device (S).

2. Magazine (1) according to claim 1, the storage groove (20) of which is formed so that the joining elements (F) are held therein by positive fit.

3. Magazine (1) according to claim 1, the brush-like arrangement (40) of which is disposed at a side of the base element (10) facing away from a setting channel.

4. Magazine (1) according to claim 1, the advancing mechanism of which has a plurality of air jets which are disposed within the storage groove (20), so that the joining elements (F) can be moved by blowing air into the storage groove (20).

5. Magazine (1) according to claim 1, the dispensing mechanism (50) of which comprises a rotary slider (52) that moves the joining elements (F) individually out of the storage groove (20) into the head piece (5) of the setting device (S).

6. Magazine (1) according to claim 1 or 5, the dispensing mechanism (50) of which has two spring preloaded jaws (54) that close the head piece (5) of the setting device (S), particularly the setting channel of the head piece (5), in a movable manner, and automatically unblock the setting channel upon pressure by a joining element (F).

7. Magazine (1) according to claim 1, that further has a connecting module (15) at the outer edge of the base element (10) at which a pre-magazine (70) for joining elements (F) can be fastened to the magazine (1), so that joining elements (F) can be transferred out of the pre-magazine (70) into the storage groove (20).

8. Magazine (1) according to claim 1, that further has a sensor adjacent to the storage groove (20) by means of which a falling below a minimum number of joining elements (F) within the storage groove (20) can be detected.

9. A setting device (S) for the setting of joining elements (F) that comprises a magazine (1) according to one of the claims 1 to 8.

10. The setting device (S) according to claim 9, which is fastened to a robot (R) so that the setting device (S) can be moved toward a provisioning module (B).

11. Method for feeding joining elements (F) to a magazine (1), according to one of the claims 1 to 8, of a setting device (S), **characterized by** the following steps:
a) filling (IV) a pre-magazine (70) of a provisioning module (B) with a plurality of joining elements (F) which are arranged aligned and movable,
b) moving a setting device (S) with the magazine (1) to the pre-magazine (70) and coupling (VIII, X) the magazine (1) to the pre-magazine (70), and
c) sliding (VIII, XI) the joining elements out of the pre-magazine (70) into the magazine (1) of the setting device (S) using a slider unit (80).

## Revendications

1. Magasin (1) susceptible d'être muni d'un appareil de pose (S) pour le stockage et l'alimentation d'une pluralité d'éléments d'assemblage (F), en particulier des boulons de fixation, avec les caractéristiques suivantes :
a) un élément de base (10) avec lequel est muni intérieurement l'appareil de pose (S), avec une rainure de stockage hélicoïdale (20) s'étendant d'un bord périphérique de l'élément de base (10) jusqu'au centre de celui-ci, et dans laquelle les éléments d'assemblage (F) sont orientés et peuvent être admis à une extrémité radialement extérieur tout en étant déplaçables conjointement, une extrémité radialement intérieure de la rainure de stockage (20) étant conçue pour déboucher dans une portion de tête (5) de l'appareil de pose, **caractérisé en ce que** le magasin (1) présente en outre :
b) un mécanisme de poussée avec un arrangement rotatif du genre brosse (40) conçu de façon planaire, avec lequel les éléments d'assemblage (F) peuvent être déplacés vers la portion de tête (5) de l'appareil de pose (S) par une liaison par friction à l'intérieur de la rainure de stockage (20), et
c) un mécanisme d'alimentation (50) avec lequel les éléments d'assemblage (F) peuvent être alimentés vers la portion de tête (5) de l'appareil de pose (S) à l'intérieur de la rainure de stockage (20).

2. Magasin (1) selon la revendication 1, dont la rainure de stockage (20) est conçue de telle façon que les éléments d'assemblage (F) sont maintenus dans celle-ci par complémentarité de forme.

3. Magasin (1) selon la revendication 1, dont l'arrangement du genre brosse (40) est prévu d'un côté de l'élément de base (10) qui est détourné d'un canal de pose.

4. Magasin (1) selon la revendication 1, dont le mécanisme de poussée présente une pluralité de buses d'air agencées à l'intérieur de la rainure de stockage (20), de manière à ce que les éléments d'assemblage (F) puissent être déplacés par injection d'air dans la rainure de stockage (20).

5. Magasin (1) selon la revendication 1, dont le mécanisme d'alimentation (50) comporte un poussoir rotatif (52) déplaçant les éléments d'assemblage (F) individuellement hors de la rainure de stockage (20) et dans la portion de tête (5) de l'appareil de pose (S).

6. Magasin (1) selon la revendication 1 ou 5, dont le mécanisme d'alimentation (50) présente deux mâchoires (54) précontraintes par ressort fermant de façon mobile la portion de tête (5) de l'appareil de pose (S), en particulier le canal de pose de la portion de tête (5), et libérant le canal de pose automatiquement en cas de pression par un élément d'assemblage (F).

7. Magasin (1) selon la revendication 1, présentant en outre un module d'accouplement (15) sur le bord extérieur de l'élément de base (10), avec lequel un avant-magasin (70) pour des éléments d'assemblage (F) peut être fixé sur le magasin (1), de manière à ce que des éléments d'assemblage (F) puissent être transférés de l'avant-magasin (70) dans la rainure de stockage (20).

8. Magasin (1) selon la revendication 1, présentant en outre un capteur adjacent à la rainure de stockage (20), capable de détecter si des éléments d'assemblage (F) tombent en dessous d'une quantité minimum à l'intérieur de la rainure de stockage (20).

9. Appareil de pose (S) pour la pose d'éléments d'assemblage (F), présentant un magasin (1) selon l'une des revendications 1 à 8.

10. Appareil de pose (S) selon la revendication 9, lequel est fixé à un robot (R), de manière à pouvoir déplacer l'appareil de pose (S) vers un module d'alimentation (B).

11. Procédé d'alimentation pour des éléments d'assemblage (F) vers un magasin (1) selon l'une des revendications 1 à 8 d'un appareil de pose (S), **caractérisé par** les étapes suivantes :
a) chargement (IV) d'un avant-magasin (70) d'un module d'alimentation (B), avec une pluralité d'éléments d'assemblage (F) déplaçables et agencés de façon orientée,
b) déplacement d'un appareil de pose (S) avec le magasin (1) vers l'avant-magasin (70) et accouplement (VIII, X) du magasin (1) à l'avant-magasin (70), et
c) poussée (VIII, XI) des éléments d'assemblage (F) hors de l'avant-magasin (70), dans le magasin (1) de l'appareil de pose (S) à l'aide d'une unité de poussée (80).
